# EUROPEAN PATENT SPECIFICATION

(11) **EP 3 706 289 B1**
(45) Date of publication and mention of the grant of the patent: **21.10.2026**
(21) Application number: 18857400.8
(22) Date of filing: 25.06.2018
(51) Int. Cl.: H02K 9/06, H02K 1/2788, H02K 21/22

(54) **OUTER ROTOR-TYPE ROTARY ELECTRIC MACHINE**
DREHENDE ELEKTRISCHE MASCHINE MIT AUSSENROTOR
MACHINE ÉLECTRIQUE TOURNANTE DE TYPE À ROTOR EXTÉRIEUR

(30) Priority: 02.11.2017 WO PCT/JP2017/039711
(43) Date of publication of application: 09.09.2020
(73) Proprietor: Mitsuba Corporation, Kiryu-shi, Gunma 376-8555 (JP)
(72) Inventor: SAKAUE, Mika, Kiryu-shi Gunma 376-8555 (JP); MATSUI, Takanori, Kiryu-shi Gunma 376-8555 (JP); SATO, Manabu, Kiryu-shi Gunma 376-8555 (JP); HAGIMURA, Masami, Kiryu-shi Gunma 376-8555 (JP)
(74) Representative: Ipsilon
(86) International application number: PCT/JP2018/023983
(87) International publication number: WO 2019/087456

(56) References cited:
- EP-A1- 1 553 683
- WO-A1-2007/123171
- WO-A1-2007/123171
- DE-A1- 19 513 134
- JP-A- 2002 153 095
- JP-A- 2003 023 741
- JP-A- 2009 213 264
- JP-A- 2009 213 264
- JP-A- 2009 254 205
- JP-A- H0 739 094
- JP-A- H0 739 094
- JP-U- S5 223 309

## Description

### [Technical Field]

### [Background Art]

Some outer rotor-type rotary electric machines have two functions, namely an engine starting function and a power generation function of converting a part of the rotational motion of an engine into electrical energy regarding a rotary electric machine that is used in a vehicle such as a motorcycle, for example. This type of rotary electric machine includes a stator around which a coil is wound and a flywheel unit (rotor) that is formed into a cylindrical shape with a bottom to cover the periphery of the stator and includes a rotor yoke that has an inner peripheral surface with a plurality of magnets arranged thereon. In addition, such a rotary electric machine is disposed in the vicinity of the engine, and the flywheel unit is attached to a crankshaft of the engine. Then, the flywheel unit rotates integrally with the crankshaft.

Here, there is strong demand for size reduction and improvement in performance of the rotary electric machine as described above. In addition, there is also a case in which a cooling fan for cooling the engine or the rotary electric machine is provided on a bottom portion of the flywheel unit in order to improve the performance.

### [Citation List]

### [Patent Literature]

[Patent Literature 1]
Japanese Patent Application, Publication No. 2016-111909

### [Summary of Invention]

### [Technical Problem]

Incidentally, in a case in which a cooling fan is provided on a flywheel unit as in the aforementioned related art, it is necessary to dispose the cooling fan on a side of the rotary electric machine opposite to the engine. If the cooling fan is disposed between the engine and the rotary electric machine, for example, it may become difficult to take in a large amount of external air with the cooling fan, and the efficiency of the cooling fan may be degraded. Therefore, it is possible to take in more external air with the cooling fan and to improve the efficiency of the cooling fan by disposing the cooling fan on the side of the rotary electric machine opposite to the engine.

However, if the cooling fan is disposed on the side of the rotary electric machine opposite to the engine, the flywheel unit is disposed at a position away from the engine in accordance with this arrangement, and there is thus a probability that the crankshaft will tend to shake during rotation.

Further, increasing the weight of the rotor yoke in order to increase the inertial force of the flywheel unit for the purpose of improving the engine starting performance and improving the efficiency of the rotary electric machine may be conceived. However, if it is attempted to simply increase the weight of the rotor yoke, there is a probability that the size of the rotor yoke will increase and the entire size of the flywheel unit and the rotary electric machine will increase. The following documents do not provide solutions for overcoming the above drawback: document EP1553683 discloses an arrangement in which vanes are integrally with the closed end of the bottomed cylindrical rotor yoke with the intake holes disposed therebetween, document WO2007123171 teaches how to secure magnets, and document DE19513134 teaches a cooling fan integrated into the rotor housing.

The present invention provides an outer rotor-type rotary electric machine with which it is possible to effectively reduce the size and to improve the performance thereof.

### [Solution to Problem]

The invention is defined by the features of claim 1 and is directed to an outer rotor-type rotary electric machine and a motorcycle as defined by the appended claims. An outer rotor-type rotary electric machine includes: a stator that is secured to an engine; and a rotor yoke that is attached to a crankshaft of the engine and covers the stator on a side opposite to the engine, in which the rotor yoke includes a rotor boss that is fitted onto and secured to the crankshaft, a disk-shaped bottom portion that is provided at an end of the rotor boss on a side opposite to the engine and is formed coaxially with a rotation axial line of the crankshaft, and a side portion that extends and bends on a side of the engine from an outer peripheral edge of the bottom portion, covers an outer peripheral surface of the stator, and has an inner peripheral surface with a plurality of magnets provided thereon at equal intervals, and in which a protruding portion that protrudes on a side opposite to the engine is provided at an outer peripheral portion and a cooling fan is provided on a surface of the bottom portion on a side opposite to the engine.

In this manner, it is possible to effectively increase the weight of the outer peripheral portion of the rotor yoke as compared with the central part of the rotor yoke in the radial direction by forming the protruding portion that protrudes on a side opposite to the engine in the outer peripheral surface of the bottom portion of the rotor yoke. As a result, it is possible to efficiently increase the inertial force of the rotor yoke while curtailing increase in size of the rotor yoke.

Also, it is not necessary to elongate the crankshaft and to curtail shaking of the crankshaft during rotation.

In addition, the cooling fan is not disposed between the engine and the outer rotor-type rotary electric machine, and the cooling fan can be disposed on the side of the outer rotor-type rotary electric machine opposite to the engine since the cooling fan is provided in a surface of the bottom portion of the rotor yoke on the side opposite to the engine.

Therefore, it is possible to reduce the size and improve performance of the outer rotor-type rotary electric machine.

The protruding portion is formed over an entire outer peripheral portion of the bottom portion in the outer rotor-type rotary electric machine.

With such a configuration, it is possible to more reliably increase the weight of the outer peripheral portion of the rotor yoke as compared with the central part of the rotor yoke in the radial direction. Therefore, it is possible to reliably increase the inertial force of the rotor yoke.

A plurality of communication holes can be formed at the respective positions corresponding to mid-points between adjacent magnets of the plurality of magnets at the protruding portion in the outer rotor-type rotary electric machine.

With such a configuration, since a positioning jig for magnets can be inserted into a communication hole from the outside of the bottom portion of the rotor yoke, for example, it is possible to simplify utilization of the positioning jig. Therefore, it is possible to simplify assembly of the magnets with the rotor yoke.

An attachment seat that has an attachment hole that couples the bottom portion to the rotor boss can be provided at a center of the bottom portion in a radial direction, and the attachment seat can be disposed such that the attachment seat deviates toward the side of the engine from the bottom portion in the outer rotor-type rotary electric machine.

Here, the rotor yoke is provided such that the rotor yoke covers the stator from the side of the stator opposite to the engine. Therefore, it is possible to make the crankshaft that protrudes from the engine short by causing the attachment seat for coupling the rotor boss fitted onto and secured to the crankshaft to the bottom portion to deviate toward the side of the engine. Therefore, it is possible to reliably curtail shaking of the crankshaft during rotation and to more reliably reduce the size and improve performance of the outer rotor-type rotary electric machine.

The outer rotor-type rotary electric machine may include: a magnet cover that is fixed to an inner surface of the bottom portion at the rotor yoke and covers the magnets from a side of the inner peripheral surface to hold the magnets, and pores that allow an inside of the rotor yoke in the radial direction to communicate with the communication hole of the rotor yoke are formed in the magnet cover in the outer rotor-type rotary electric machine.

With such a configuration, it is possible to reliably secure the magnets to the rotor yoke with the magnet cover.

Also, also in a case in which the magnet cover is provided, it is possible to reliably discharge water droplets and the like in the rotor yoke outside of the rotor yoke using the pores formed in the magnet cover and the communication hole formed in the rotor yoke. That is, the communication hole functions as a pore for discharging water. Therefore, it is possible to provide an outer rotor-type rotary electric machine with high reliability capable of reliably preventing operation failures.

The magnet cover may include a cover main body that covers an inner peripheral surface of the magnets, an inner flange portion that projects from an end of the cover main body on a side of the bottom portion of the rotor yoke toward the inside in the radial direction, and an outer flange portion that projects from an end of the cover main body on a side of an opening portion of the rotor yoke toward the outside in the radial direction, and the inner flange portion is secured to the inner surface of the bottom portion, and the pore is formed in the inner flange portion in the outer rotor-type rotary electric machine.

With such a configuration, it is possible to reliably discharge water droplets in the rotor yoke to the outside of the rotor yoke while protecting the magnets with the magnet cover.

The pore may be formed at a position at which the pore does not overlap the magnets in the radial direction in the outer rotor-type rotary electric machine.

With such a configuration, it is possible to curtail contact of the magnets with water in contrast to a case in which the pore is formed at a position at which the pore overlaps the magnets in the radial direction.

The outer rotor-type rotary electric machine may include a magnet cover that is secured to the inner surface of the bottom portion at the rotor yoke and covers the magnets from a side of the inner peripheral surface to hold the magnets, and a slit that causes the inside of the rotor yoke in the radial direction to communicate with the communication hole of the rotor yoke is formed in the magnet cover in the outer rotor-type rotary electric machine.

With such a configuration, it is possible to reliably secure the magnets to the rotor yoke with the magnet cover.

In addition, even in a case in which the magnet cover is provided, it is possible to reliably discharge water droplets in the rotor yoke to the outside of the rotor yoke using the slit formed in the magnet cover and the communication hole formed at the rotor yoke. That is, the communication hole functions as a pore for discharging water. Also, it is possible to reliably prevent the water droplets from accumulating in a gap between the rotor yoke and the inner flange portion of the magnet cover. Therefore, it is possible to provide an outer rotor-type rotary electric machine with high reliability capable of reliably preventing operation failures.

The magnet cover may include a cover main body that covers the inner peripheral surface of the magnets, an inner flange portion that projects from an end of the cover main body on the side of the bottom portion of the rotor yoke toward the inside in the radial direction, and an outer flange portion that projects from an end of the cover main body on the side of the opening portion of the rotor yoke toward the outside in the radial direction, and the inner flange portion is secured to the inner surface of the bottom portion, and the slit is formed at the inner flange portion in the outer rotor-type rotary electric machine.

With such a configuration, it is possible to reliably discharge water droplets in the rotor yoke to the outside of the rotor yoke while protecting the magnets with the magnet cover.

The slit is formed at a position at which the slit does not overlap the magnets in the radial direction in the outer rotor-type rotary electric machine.

With such a configuration, it is possible to curtail contact of the magnets with water in contrast to a case in which the slit is formed at a position at which the slit overlaps the magnets in the radial direction.

A motorcycle includes: the outer rotor-type rotary electric machine; a body to which the outer rotor-type rotary electric machine is attached, and a side stand that is provided outside the body in a body width direction, in which the outer rotor-type rotary electric machine and the side stand are disposed in a surface on a same side of the body in the body width direction.

Here, in a case in which the outer rotor-type rotary electric machine is attached to the outside of the body of the motorcycle in the body width direction, there is a probability that water droplets or the like may accumulate in the rotor yoke depending on an inclination direction of the body. In particular, in a case in which the side stand is used to stop the body, the body is stopped while being inclined to the side of the side stand, and therefore, the side portion of the rotor yoke has a downward gradient from the side of the opening portion toward the side of the bottom portion if the outer rotor-type rotary electric machine is attached to the side surface on the same side as the side of the side stand of the body. Therefore, there is a probability that water droplets or the like may accumulate in the rotor yoke. However, the communication hole is formed at the bottom portion of the rotor yoke, and the pore that communicates with the communication hole is formed in the magnet cover. As a result, it is possible to reliably discharge the water droplets or the like in the rotor yoke to the outside of the rotor yoke. Therefore, it is possible to reliably prevent operation failures of the motorcycle and to improve reliability of the motorcycle.

### [Advantageous Effects of Invention]

According to the invention, it is possible to effectively increase the weight of the outer peripheral portion of the rotor yoke as compared with the central part of the rotor yoke in the radial direction by forming the protruding portion that protrudes toward the side opposite to the engine in the outer peripheral surface of the bottom portion of the rotor yoke. As a result, it is possible to efficiently increase an inertial force of the rotor yoke while curtailing an increase in the size of the rotor yoke.

In addition, it is not necessary to elongate the crankshaft, and it is possible to curtail shaking of the crankshaft during rotation.

In addition, since the cooling fan is provided on the surface on the side of the bottom portion of the rotor yoke opposite to the engine, the cooling fan is not disposed between the engine and the outer rotor-type rotary electric machine, and the cooling fan can be disposed on the side of the outer rotor-type rotary electric machine opposite to the engine.

Therefore, it is possible to reduce the size and improve performance of the outer rotor-type rotary electric machine.

### [Brief Description of Drawings]

Fig. 1 is a sectional view of an outer rotor-type rotary electric machine according to a first embodiment of the invention.
Fig. 2 is an exploded perspective view of the outer rotor-type rotary electric machine according to the first embodiment of the invention.
Fig. 3 is an exploded perspective view of a rotor according to the first embodiment of the invention.
Fig. 4 is a plan view of a side portion of a rotor yoke when seen from the side of an inner peripheral surface according to the first embodiment of the invention.
Fig. 5 is a plan view of a state in which a rotary electric machine is attached to a body of a motorcycle when seen from a rear side of the body in a traveling direction according to a second embodiment of the invention.
Fig. 6 is a perspective view of a magnet cover according to the second embodiment of the invention.

### [Description of Embodiments]

Next, embodiments of the invention will be described with reference to drawings.

### (First embodiment)

### (Outer rotor-type rotary electric machine)

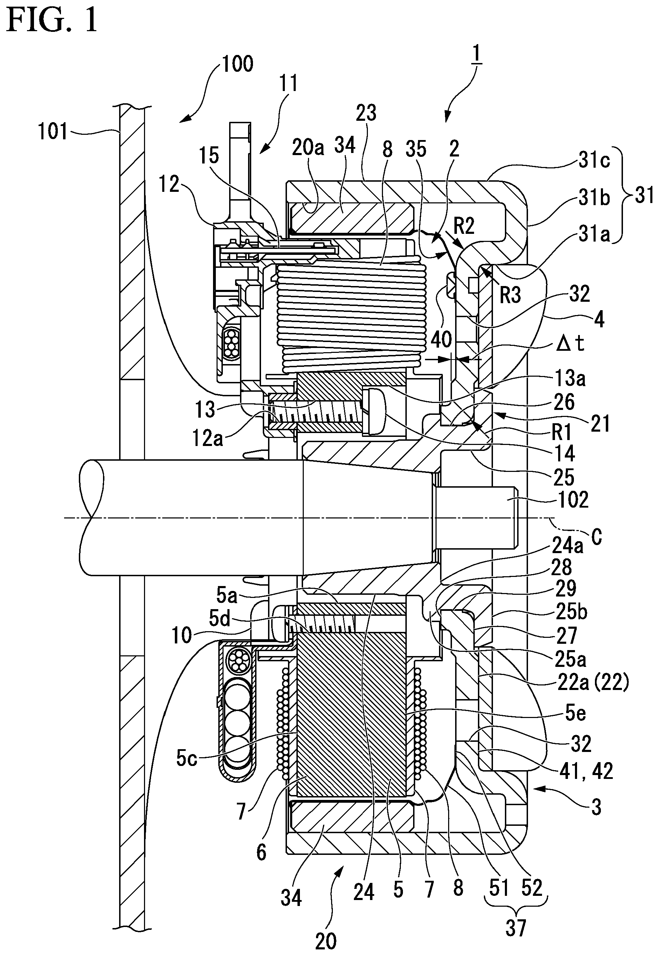

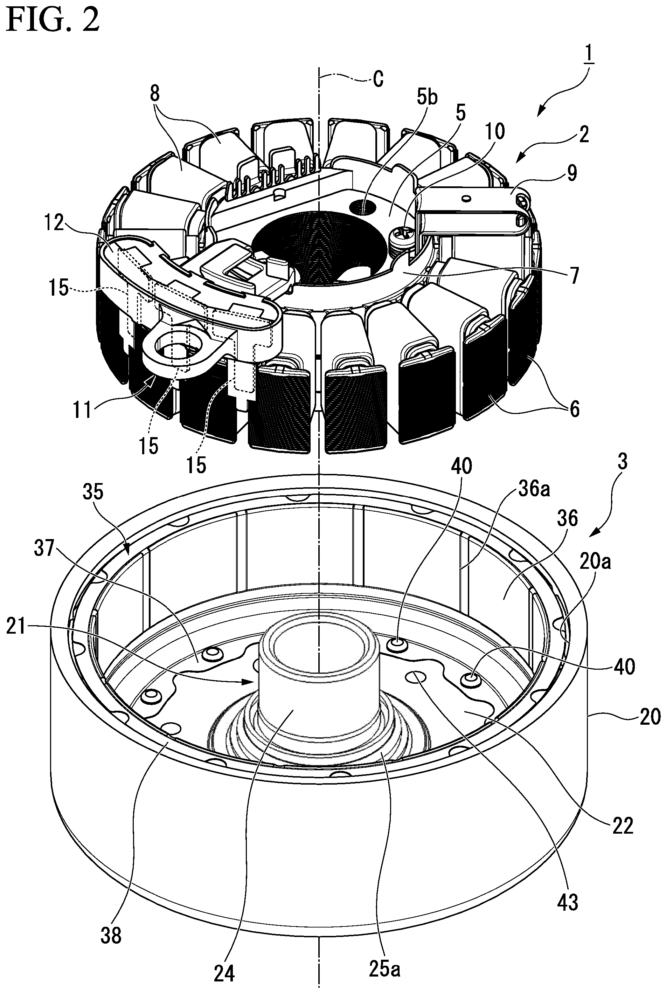

Fig. 1 is a sectional view of an outer rotor-type rotary electric machine 1. Fig. 2 is an exploded perspective of the outer rotor-type rotary electric machine 1.

As illustrated in Figs. 1 and 2, the outer rotor-type rotary electric machine (hereinafter, simply referred to as a rotary electric machine) 1 includes a stator 2 that is secured to a crankcase 101 of an engine 100 of a motorcycle or the like, a flywheel unit 3 that is attached to a crankshaft 102 of the engine 100, and a cooling fan 4 that is provided at the flywheel unit 3, for example.

Note that in the following description, a direction along a rotation axial line C of the flywheel unit 3 (crankshaft 102) will simply be referred to as an axial direction, a radial direction of the flywheel unit 3 that perpendicularly intersects the axial direction will simply be referred to as a radial direction, and a rotation direction of the flywheel unit 3 that perpendicularly intersects the axial direction and the radial direction will be referred to as a circumferential direction.

### (Stator)

The stator 2 has a substantially annular-shaped stator core 5. The stator core 5 is fastened and secured to the crankcase 101 of the engine 100 with a bolt, which is not illustrated in the drawing. The stator core 5 is obtained by laminating plate materials of magnetic materials in the axial direction, for example. However, the stator core 5 is not limited thereto, and the stator core 5 may be formed through pressurization molding of soft magnetic powder, for example.

A through-hole 5a that penetrates in the axial direction is formed at the center of the stator core 5 in the radial direction. The crankshaft 102 and a rotor boss 21, which will be described later, are inserted into the through-hole 5a. A tip end of the crankshaft 102 protrudes on a side opposite to the crankcase 101 of the stator core 5 via the through-hole 5a and the rotor boss 21.

In addition, bolt insertion holes 5b through which bolts that are for fastening and securing the stator core 5 to the crankcase 101 and are not illustrated in the drawing can be inserted are formed in the stator core 5 at three locations at equal intervals in the circumferential direction.

Further, a plurality of teeth 6 that are formed such that the teeth 6 radially protrude toward the outside in the radial direction are provided in the outer peripheral surface of the stator core 5. A coil 8 is wound around each of the teeth 6 on an insulator 7 that is mounted on each of the teeth 6. A terminal portion of each coil 8 is drawn out toward the side of the crankcase 101 (the left side in Fig. 1 and the upper side in Fig. 2).

The terminal portions of these coils 8 are bundled and held with a harness clip 9 provided in one surface 5c on the side of the crankcase 101 of the stator core 5. A female screw portion 5d for fastening and fixing the harness clip 9 with the bolt 10 is engraved in the one surface 5c of the stator core 5. The terminal portions of the coils 8 are connected to a harness and are electrically connected to a higher controller and the like (all of which are not illustrated).

In addition, a position detection sensor 11 is provided in the one surface 5c of the stator core 5. The position detection sensor 11 is adapted to detect a rotation position of the flywheel unit 3. In the position detection sensor 11, a sensor substrate 15 with a magnetic detection element, which is not illustrated, mounted thereon is accommodated in a sensor case 12. The magnetic detection element detects a magnetic flux of magnets 34, which will be described later, of the flywheel unit 3. Since the magnetic flux changes with rotation of the flywheel unit 3, the position detection sensor 11 detects the rotation position of the flywheel unit 3 by detecting the change of the magnetic flux.

In the sensor case 12, a female screw portion 12a for fastening and fixing the sensor case 12 to the stator core 5 with the bolt 14 is engraved.

Meanwhile, a bolt insertion hole 13 from which a bolt 14 can be inserted from the other surface 5e on the side opposite to the one surface 5c is formed at the stator core 5. The sensor case 12 is fastened and fixed to the stator core 5 by screwing the bolt 14 that is inserted into the bolt insertion hole 13 into the female screw portion 12a at the sensor case 12. Also, a counter sinking portion 13a that prevents the head of the bolt 14 that is inserted into the bolt insertion hole 13 from protruding from the other surface 5e of the stator core 5 is formed in the bolt insertion hole 13.

### (Flywheel unit)

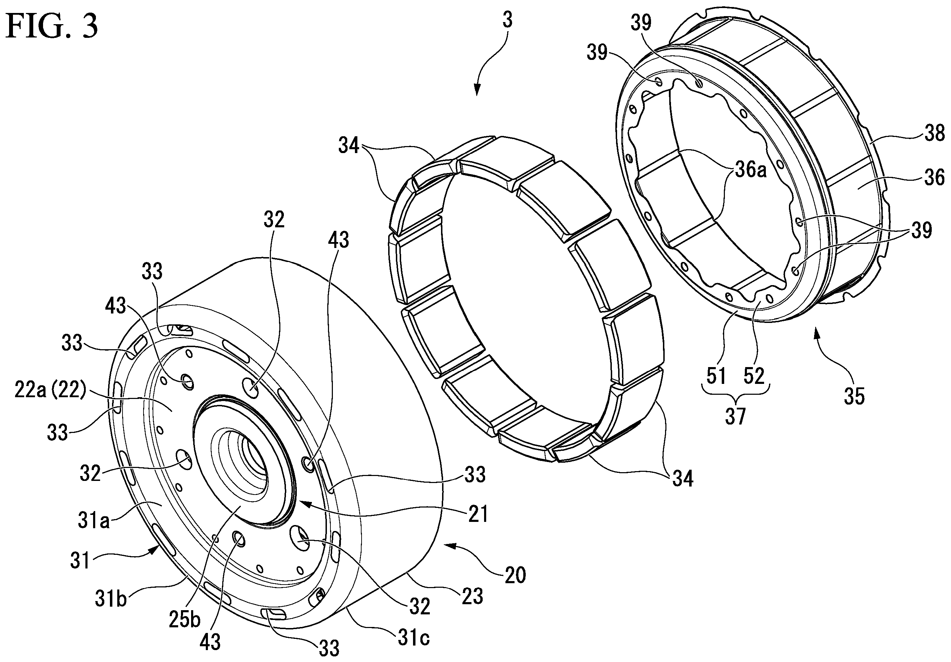

Fig. 3 is an exploded perspective view of the flywheel unit 3.

As illustrated in Figs. 1 to 3, the flywheel unit 3 includes a rotor yoke 20 that has an opening portion 20a on the side of the crankcase 101 such that the rotor yoke 20 covers the stator 2 from the side opposite to the crankcase 101 (from the side of the other surface 5e of the stator core 5). That is, the rotor yoke 20 has a rotor boss 21 that is fitted onto and secured to the crankshaft 102 on the side of the tip end, a substantially disk-shaped bottom portion 22 that is provided at an end of the rotor boss 21 on the side opposite to the crankcase 101, and a substantially cylindrical-shaped side portion 23 that extends and bends from the outer peripheral edge of the bottom portion 22 toward the side of the crankcase 101 and covers the outer peripheral surface of the stator core 5. In addition, a peripheral edge of the side portion 23 on the side opposite to the bottom portion 22 is configured as the opening portion 20a of the rotor yoke 20.

The rotor boss 21 has a substantially cylindrical boss main body 24 that is fitted onto and secured to the crankshaft 102 on the side of the tip end. The boss main body 24 is disposed in the through-hole 5a of the stator core 5 at a predetermined gap from the inner peripheral surface of the through-hole 5a. A substantially cylindrical-shaped boss-side coupling portion 25 formed with a diameter that is larger than that at the boss main body 24 via a stepped portion 24a is integrally molded at the end of the boss main body 24 on the side opposite to the crankshaft 102. The boss-side coupling portion 25 is for coupling the rotor boss 21 to the bottom portion 22. A small flange portion 25a that projects to the outside in the radial direction is formed at a position corresponding to the stepped portion 24a in the outer peripheral surface of the boss-side coupling portion 25.

In addition, a large flange portion 25b with a larger diameter than that of the small flange portion 25a is integrally molded at the end on the side opposite to the boss main body 24 in the outer peripheral surface of the boss-side coupling portion 25. An attachment seat 27, which will be described later, of the bottom portion 22 is disposed between the small flange portion 25a and the large flange portion 25b. In addition, the attachment seat 27 of the bottom portion 22 is disposed with the attachment seat 27 interposed between the small flange portion 25a and the large flange portion 25b.

In addition, a boss-side serration 26 is formed between the small flange portion 25a and the large flange portion 25b in the outer peripheral surface of the boss-side coupling portion 25. The boss-side serration 26 cooperates with a bottom portion-side serration 29 formed at the bottom portion 22 for preventing the bottom portion 22 from relatively rotating with respect to the rotor boss 21.

The attachment seat 27 that is formed into a substantially annular plate shape is integrally molded at the center of the bottom portion 22 in the radial direction. The attachment seat 27 is formed such that the attachment seat 27 slightly deviates from the bottom portion 22 toward the side of the crankcase 101 by performing press-working on the bottom portion 22. The amount of deviation Δt between the bottom portion 22 and the attachment seat 27 can arbitrarily be set.

The attachment seat 27 has a substantially cylindrical-shaped bottom portion-side coupling portion 28 that is formed by causing the inner peripheral edge to bend to slightly stand toward the side of the crankcase 101. In addition, the outer peripheral surface of the boss-side coupling portion 25 is brought into a state in which the outer peripheral surface is press-fitted into the inner peripheral surface of the bottom portion-side coupling portion 28. In addition, the interval between the small flange portion 25a and the large flange portion 25b of the rotor boss 21 is set to be equivalent to the height of the bottom portion-side coupling portion 28 in the axial direction. In this manner, the attachment seat 27 is fitted onto the rotor boss 21 and is interposed between the small flange portion 25a and the large flange portion 25b.

In addition, the bottom portion-side serration 29 is formed in the inner peripheral surface of the bottom portion-side coupling portion 28. The attachment seat 27 (bottom portion 22) is coupled to the rotor boss 21 such that the attachment seat 27 cannot relatively rotate with the bottom portion-side serration 29 and the boss-side serration 26 formed at the rotor boss 21.

Here, it is desirable to set the curvature radius R1 of the outside of the bending portion of the bottom portion-side coupling portion 28 to be as small as possible. In this manner, it is possible to ensure the maximum area of the inner peripheral surface of the bottom portion-side coupling portion 28 by setting the curvature radius R1. In this manner, it is possible to ensure the maximum contact area between the inner peripheral surface of the bottom portion-side coupling portion 28 and the outer peripheral surface of the rotor boss 21. It is possible to reliably secure the rotor boss 21 to the attachment seat 27 in accordance with the area secured to be large.

In addition, a plurality of (three in the first embodiment, for example) through-holes 32 are formed at equal intervals in the circumferential direction in the periphery of the attachment seat 27 in the bottom portion 22. The through-holes 32 play a role in reducing the weight of the rotor yoke 20. In addition, it is also possible to take the air to the side of the stator 2 via the through-holes 32 and to enhance the effect of cooling the stator 2 by providing a structure in which the through-holes 32 are not blocked to the cooling fan 4.

Further, a plurality of attachment bosses 40 are formed at equal intervals in the circumferential direction such that the attachment bosses 40 are slightly close to the outer periphery as compared with the through-hole 32 in the bottom portion 22. The attachment bosses 40 are formed such that the attachment bosses 40 protrudes toward the side of the crankcase 101 by performing press-working on the bottom portion 22. The attachment bosses 40 are for securing the magnet cover 35, which will be described later.

Further, the protruding portion 31 that protrudes toward the side opposite to the crankcase 101 is formed over the entire periphery of the outer peripheral portion of the bottom portion 22. That is, the protruding portion 31 is formed into a substantially annular shape when seen in the axial direction. In addition, the protruding portion 31 is formed by causing the outer peripheral portion of the bottom portion 22 to once bend on the side opposite to the crankcase 101 and then folding back the outer peripheral portion toward the side of the crankcase 101 by press-working the bottom portion 22.

That is, the protruding portion 31 is formed with an inner side wall 31a that is formed to have a section with a substantially C shape that opens on the side of the crankcase 101 and stands on the side opposite to the crankcase 101 from the bottom portion 22 in the axial direction, a flat lateral wall 31b that extends and bends from the tip end of the inner side wall 31a toward the outside in the radial direction, a lateral wall 31b, and an outer side wall 31c that extends and bends from the end of the lateral wall 31b on the outer side in the radial direction toward the side of the crankcase 101 in the axial direction.

A plurality of jig holes (communication holes) 33 are formed at equal intervals in the circumferential direction in the lateral wall 31b. The jig holes 33 are formed into long oval shapes in the circumferential direction such that the jig holes 33 have arc shapes when seen in the axial direction. The jig holes 33 are used to position the magnets 34 provided in the inner peripheral surface of the side portion 23 (details will be described later).

Here, since the protruding portion 31 is obtained by bending and forming the bottom portion 22 through press-working, it is desirable to set the curvature radius R2 of the outside of the bending portion between the bottom portion 22 and the inner side wall 31 a to be as large as possible. It is possible to set the thicknesses of the bottom portion 22 and the inner side wall 31a to be as thick as possible by setting the curvature radius R2 in this manner.

A recessed portion 41 is formed inside the protruding portion 31 in the radial direction by the protruding portion 31 being formed at the outer peripheral portion of the bottom portion 22. The recessed portion 41 functions as a cooling fan accommodation recessed portion 42 that accommodates the cooling fan 4. That is, the cooling fan 4 is fastened and secured to the bottom portion 22 of the rotor yoke 20 in a state in which the cooling fan 4 is accommodated in the cooling fan accommodation recessed portion 42.

A plurality of (three in the first embodiment, for example) female screw portions 43 for fastening and securing the cooling fan 4 are formed at equal intervals in the circumferential direction in the bottom portion 22.

The side portion 23 of the rotor yoke 20 extends from the tip end of the outer side wall 31c of the protruding portion 31 in the axial direction. The plurality of magnets 34 are provided at positions at which the magnets 34 face the stator core 5 in the radial direction in the inner peripheral surface of the side portion 23. The respective magnets 34 are disposed at equal intervals such that the magnetic poles are aligned in order.

Here, the number of gaps between the magnets 34 coincides with the number of jig holes 33 formed in the rotor yoke 20. Also, the gaps between the magnets 34 are positioned at the centers of the jig holes 33 in the circumferential direction.

In addition, the respective magnets 34 are held with the magnet cover 35 that is secured to the rotor yoke 20.

The magnet cover 35 is formed with a cover main body 36 that covers the inner peripheral surface of each magnet 34, an inner flange portion 37 that projects from the end of the cover main body 36 on the side of the bottom portion 22 of the rotor yoke 20 toward the inside in the radial direction, and an outer flange portion 38 that projects from the end of the cover main body 36 on the side of the opening portion 20a of the rotor yoke 20 toward the outside in the radial direction.

The cover main body 36 is formed such that the outer peripheral surface abuts on the inner peripheral surfaces of the magnets 34 provided at the side portion 23 of the rotor yoke 20. Also, protruding-shaped portions 36a that protrudes in the axial direction toward the inside in the radial direction are formed at positions corresponding to the gaps between the respective magnets 34 in the cover main body 36. The respective magnets 34 are held in a state in which the magnets 34 are separated from each other at predetermined intervals with these protruding-shaped portions 36a. That is, no magnets 34 are present in the protruding-shaped portions 46a, and the respective protruding-shaped portions 36a position the respective magnets 34 in the circumferential direction.

The inner flange portion 37 is formed with an inclined portion 51 that obliquely extends from the end of the cover main body 36 on the side of the bottom portion 22 of the rotor yoke 20 toward the inside in the radial direction and toward the side of the bottom portion 22, and an abutting portion 52 that extends and bends from the inclined portion 51 toward the inside in the radial direction and is caused to abut on the bottom portion 22 of the rotor yoke 20.

In addition, fitting holes 39 that can be fitted onto the attachment bosses 40 are formed at positions corresponding to the attachment bosses 40 formed at the bottom portion 22 of the rotor yoke 20 in the abutting portion 52 of the inner flange portion 37. The magnet cover 35 is secured to the rotor yoke 20 by attaching the attachment bosses 40 to the fitting holes 39 and then swaging the attachment bosses 40.

The outer flange portion 38 is formed such that the outer flange portion 38 covers the ends of the magnets 34 on the side of the opening portion 20a of the rotor yoke 20. In this manner, it is possible to prevent the magnets 34 from coming off from the rotor yoke 20.

Here, it is desirable that the curvature radius R3 of the inside of the bending portion between the bottom portion 22 and the inner side wall 31a be set to be as small as possible. It Is possible to cause the attachment bosses 40 formed at the bottom portion 22 to approach the protruding portion 31 of the rotor yoke 20 (approach the outside in the radial direction) as much as possible by reducing the curvature radius R3. It is possible to reduce the size of the inner flange portion 37 to be as small as possible by causing the attachment bosses 40 to approach the protruding portion 31. Therefore, it is possible to reduce the weight of the entire flywheel unit 3 and to reduce the costs.

### (Assembly method of rotor)

Next, an assembly method of the flywheel unit 3 will be described.

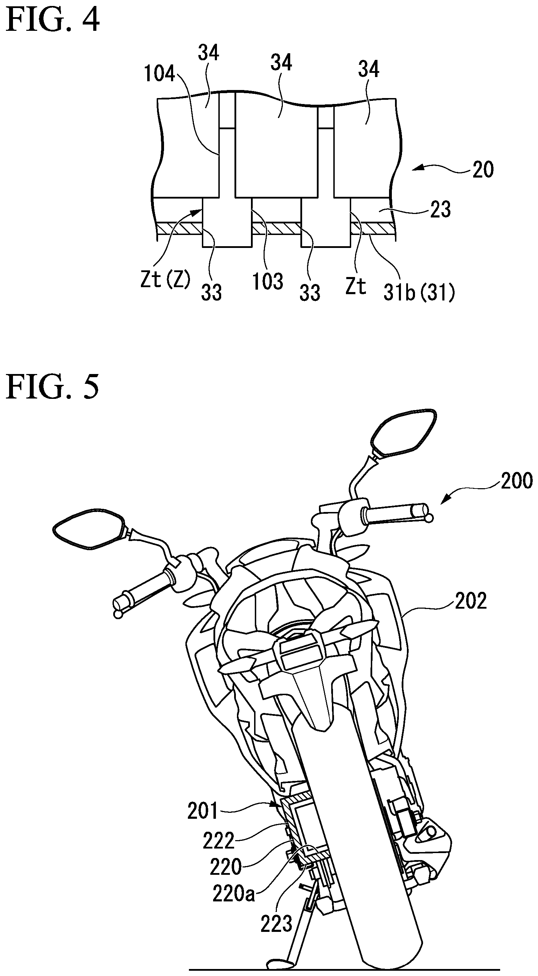

Fig. 4 is an explanatory diagram illustrating processes in the course of the assembly method of the flywheel unit 3 and is a plan view of the side portion 23 of the rotor yoke 20 when seen from the side of the inner peripheral surface.

As illustrated in the drawing, positioning protrusions Zt of jigs Z are inserted into the respective jig holes 33 formed in the protruding portion 31 of the rotor yoke 20 from the side of the one surface 22a (see Fig. 3; the lower side in Fig. 4) on the side opposite to the opening portion 20a of the rotor yoke 20 first.

Each positioning projection Zt has an axial-direction positioning portion 103 that has a section corresponding to each jig hole 33 of the rotor yoke 20 and a circumferential-direction positioning portion 104 that protrudes from the axial-direction positioning portion 103 toward the side of the opening portion 20a of the rotor yoke 20 (the upper side in Fig. 4).

The positioning of the rotor yoke 20 in the circumferential direction relative to the positioning protrusions Zt is performed by the positioning protrusions Zt being inserted into the jig holes 33 of the rotor yoke 20. In addition, the positioning of the rotor yoke 20 in the axial direction with respect to the jigs Z is performed by the lateral wall 31b of the protruding portion 31 being placed on tables of the jigs Z, which are not illustrated in the drawing, or a work table. Therefore, it is desirable to set the flatness of the lateral wall 31b to be as high as possible. It is possible to curtail inclination of the rotor yoke 20 with respect to the jigs Z as much as possible by increasing the flatness of the lateral wall 31b.

Next, the magnets 34 are set between the positioning protrusions Zt that are adjacent in the circumferential direction in a state in which the jigs Z are assembled with the rotor yoke 20. At this time, one end of each magnet 34 in the axial direction is caused to abut the axial-direction positioning portion 103 of each positioning protrusion Zt. Also, the circumferential-direction positioning portions 104 of the positioning protrusions Zt are interposed between the magnets 34 that are adjacent in the circumferential direction. In this manner, the positioning of the magnets 34 relative to the positioning jigs Z is performed. In addition, since the rotor yoke 20 has already been positioned relative to the positioning jigs Z, the positioning of the magnets 34 relative to the rotor yoke 20 is performed.

Thereafter, the magnet cover 35 is attached to the rotor yoke 20. In this manner, the assembly of the flywheel unit 3 is completed.

### (Operations of rotary electric machine)

Next, operations of the rotary electric machine 1 will be described.

First, a power generation function of converting a part of rotational motion of the engine into electric energy will be described.

If the crankshaft 102 rotates, the flywheel unit 3 rotates integrally with the crankshaft 102. Then, a magnetic flux of the magnets 34 of the flywheel unit 3 that passes through the teeth 6 of the stator 2 changes. The change of the magnetic flux serves as electromotive force, and a current is generated at the coils 8 of the stator 2. The current generated at the coils 8 is accumulated in a battery, which is not illustrated in the drawing, or is used for a purpose of supplying power to an associated electric machine, which is not illustrated in the drawing.

Here, the protruding portion 31 is formed at the outer peripheral portion of the rotor yoke 20 of the flywheel unit 3. Therefore, it is possible to effectively increase the weight of the outer peripheral portion of the rotor yoke 20 as compared with the central part of the rotor yoke 20 in the radial direction. As a result, it is possible to efficiently increase the inertial force of the rotor yoke 20 and to cause the rotor yoke 20 to rotate by inertia using the inertial force. In accordance with this, it is possible to efficiently cause the current to be generated at the coils 8.

Next, the engine starting function will be described.

When the engine 100 is started with the rotary electric machine 1, the current accumulated in the battery is selectively supplied to the coils 8. Which of the coils 8 the current is to be supplied is controlled on the basis of a result of detecting the rotation position of the flywheel unit 3 using the position detection sensor 11.

If the current is supplied to the coils 8, a magnetic flux is formed at predetermined teeth 6, and magnetic suctioning force and repulsion force are generated between the magnetic flux and the magnets 34 of the flywheel unit 3. As a result, the flywheel unit 3 rotates, and the crankshaft 102 further rotates. In this manner, the engine 100 is started.

Here, since the protruding portion 31 is formed at the rotor yoke 20, it is possible to obtain large inertial force when the rotor yoke 20 starts to rotate. It is possible to efficiently cause the crankshaft 102 to rotate using the inertial force.

In this manner, the protruding portion 31 is formed to protrude toward the side opposite to the crankcase 101 at the outer peripheral portion of the bottom portion 22 that forms the rotor yoke 20 in the aforementioned first embodiment. Therefore, it is possible to effectively increase the weight of the outer peripheral portion of the rotor yoke 20 as compared with the central part of the rotor yoke 20 in the radial direction. As a result, it is possible to efficiently increase the inertial force of the rotor yoke 20.

In addition, it is not necessary to increase the weight of the entire rotor yoke 20 in order to increase the inertial force of the rotor yoke 20. Therefore, it is possible to curtail an increase in size of the rotor yoke 20. Therefore, it is not necessary to elongate the crankshaft 102 in order to attach the rotor yoke 20, and it is possible to curtail shaking of the crankshaft 102 during rotation.

In addition, the cooling fan 4 is provided in the one surface 22a of the bottom portion 22 of the rotor yoke 20 on the side opposite to the crankcase 101. Therefore, the cooling fan 4 is not disposed between the crankcase 101 and the rotary electric machine 1. That is, since it is possible to dispose the cooling fan 4 on the side opposite to the crankcase 101 of the rotary electric machine 1, it is possible to reduce the size and increase the performance of the rotary electric machine 1.

Further, the recessed portion 41 that is formed inside the protruding portion 31 of the rotor yoke 20 in the radial direction is caused to function as the cooling fan accommodation recessed portion 42 that accommodates the cooling fan 4. Therefore, even in a case in which the cooling fan 4 is provided at the rotor yoke 20, it is possible to curtail the axial length of the entire rotary electric machine 1 as much as possible.

In addition, the protruding portion 31 of the rotor yoke 20 is formed over the entire periphery of the outer peripheral portion of the bottom portion 22. Therefore, it is possible to more effectively increase the weight of the outer peripheral portion of the rotor yoke 20 as compared with the central part of the rotor yoke 20 in the radial direction. Therefore, it is possible to reliably increase the inertial force of the rotor yoke 20.

In addition, the plurality of jig holes 33 are formed at the equal intervals in the circumferential direction in the lateral wall 31b of the protruding portion 31. In addition, the positioning protrusions Zt of the jigs Z are inserted into the jig holes 33 from the side of the one surface 22a of the rotor yoke 20 to position the magnets 34 relative to the rotor yoke 20. Since the jigs Z of the magnets 34 can be inserted from the outside (the side of the one surface 22a) of the bottom portion 22 of the rotor yoke 20 in this manner, it is possible to facilitate utilization of the jigs Z. Therefore, it is possible to facilitate the assembly of the magnets 34 with the rotor yoke 20.

In addition, the attachment seat 27 that is coupled to the rotor boss 21 is integrally molded at the center of the bottom portion 22 that forms the rotor yoke 20 in the radial direction. The attachment seat 27 is formed such that the attachment seat 27 slightly deviates from the bottom portion 22 toward the side of the crankcase 101 by performing press-working on the bottom portion 22.

Here, the rotor yoke 20 is provided such that the rotor yoke 20 covers the stator 2 from the side opposite to the crankcase 101 of the stator 2. Therefore, it is possible to set the crankshaft 102 that protrudes from the crankcase 101 to be as short as possible by causing the attachment seat 27 coupled to the rotor boss 21 that is fitted onto and secured to the crankshaft 102 to deviate toward the side of the crankcase 101. Accordingly, it is possible to reliably curtail shaking of the crankshaft 102 during rotation and to more reliably reduce the size and to increase the performance of the rotary electric machine 1.

### (Second embodiment)

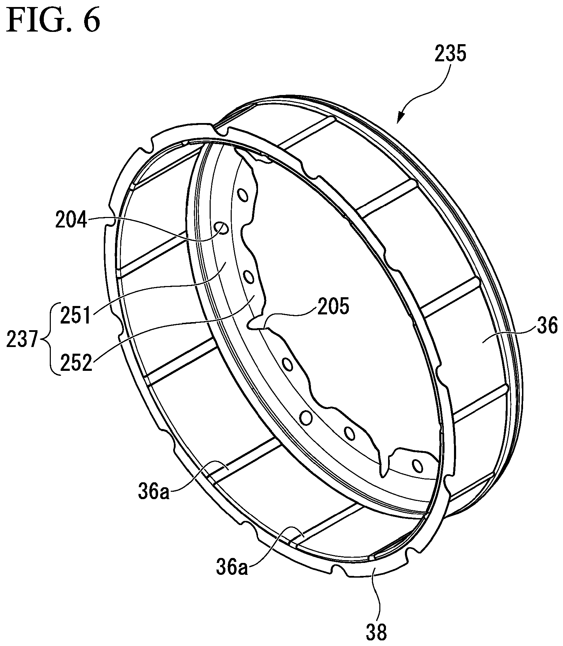

Next, a second embodiment of the invention will be described with reference to Figs. 5 and 6 while using Figs. 1, 3, and 4 as reference. Note that the same reference numerals will be applied to the same aspects as those in the aforementioned first embodiment, and description thereof will be omitted.

Fig. 5 is a plan view of a state in which a rotary electric machine 201 according to the second embodiment is attached to a body 202 of a motorcycle 200 when seen from the back side in a traveling direction of the body 202. Note that Fig. 5 illustrates a state in which a side stand 203 is used to stop the body 202.

As illustrated in Figs. 1 and 5, the second embodiment is similar to the aforementioned first embodiment in that the rotary electric machine 201 includes a stator 2 that is secured to a crankcase 101 of an engine 100, a flywheel unit 3 that is attached to a crankshaft 102 of the engine 100, and a cooling fan 4 that is provided at the flywheel unit 3. In addition, the flywheel unit 3 of the rotary electric machine 201 is similar to that in the aforementioned first embodiment in terms of a point that the flywheel unit 3 includes a rotor yoke 220 that has an opening portion 220a on the side of the crankcase 101 such that the rotor yoke 220 covers the stator 2 from the side opposite to the crankcase 101 (the side of the other surface 5e of a stator core 5). In addition, magnets 34 provided at the rotor yoke 220 are similar to those in the aforementioned first embodiment in terms of a point that the magnets 34 are held with a magnet cover 235. In addition to the aforementioned configurations, a basic configuration of the rotary electric machine 201 according to the second embodiment is similar to that of the aforementioned rotary electric machine 1 according to the first embodiment.

As illustrated in Fig. 5, the rotary electric machine 201 is attached to the outside of the body 202 in the body width direction. The rotor yoke 220 of the rotary electric machine 201 is attached in a state in which the opening portion 220a is caused to face the side of the body 202 (the engine 100; not illustrated in Fig. 5; see Fig. 1).

A side stand 203 is provided on the side surface of the body 202 that is the same as the side on which the rotary electric machine 201 is attached in both outer sides in the body width direction. The side stand 203 is used to keep the posture of the body 202 when the motorcycle 200 is stopped. The body 202 is slightly inclined on the side on which the side stand 203 is provided in a state in which the body 202 is stopped using the side stand 203. Therefore, the side portion 223 of the rotor yoke 220 of the rotary electric machine 201 has downward gradient from the side of the opening portion 220a toward the side of the bottom portion 222 in a state in which the motorcycle 200 is stopped using the side stand 203.

Here, a plurality of drain holes 204 and slits 205 are formed at an inner flange portion 237 of the magnet cover 235 according to the second embodiment. This is the point that is different from the aforementioned first embodiment.

Fig. 6 is a perspective view of the magnet cover 235 according to the second embodiment.

The drain holes 204 are formed at an inclined portion 51 of the inner flange portion 237. The drain holes 204 are formed into substantially circular shapes in a plan view. The slits 205 are formed such that the slits 205 extend from the inner peripheral edge of the abutting portion 52 of the inner flange portion 237 toward the outside in the radial direction. The slits 205 are formed from the inner peripheral edge of the abutting portion 52 of the inner flange portion 237 to the side of the abutting portion 52 of the inclined portion 51. Also, the slits 205 are formed such that the slits 205 are gradually tapered toward the inclined portion 51.

In addition, the drain holes 204 and the slits 205 are respectively formed at positions corresponding to protruding-shaped portions 36a of the magnet cover 235. That is, the drain holes 204 and the slits 205 are respectively disposed such that the drain holes 204 and the slits 205 are aligned with the protruding-shaped portions 36a of the magnet cover 235 in the axial direction. Further, the drain holes 204 and the slits 205 are arranged in a staggered manner in the circumferential direction.

Here, the inner peripheral surface of the side portion 223 of the rotor yoke 220 and the outer peripheral portion of the bottom portion 223 on the side of the inner side surface are covered with the magnet cover 235. A plurality of jig holes 33 are formed in a lateral wall 31b (see Fig. 3) of the rotor yoke 220 in the location covered with the magnet cover 235. Therefore, the drain holes 204 and the slits 205 formed in the magnet cover 235 communicate the inside of the rotor yoke 220 beyond the magnet cover 235 in the radial direction with the jig holes 33.

In a case in which water droplets enter the rotor yoke 220 via the opening portion 220a of the rotor yoke 220, for example, in such a configuration, the side portion 223 of the rotor yoke 220 has the downward gradient from the side of the opening portion 220a toward the side of the bottom portion 222, and the water droplets are thus delivered toward the side of the bottom portion 222. Thereafter, the water droplets enter between the magnet cover 235 and the side portion 223 of the rotor yoke 220 via the drain holes 204 and the slits 205 that are formed in the magnet cover 235. Thereafter, the water droplets are discharged to the outside of the rotor yoke 220 via the jig holes 33 that are formed at the rotor yoke 220. That is, the jig holes 33 function both as pores into which the jigs Z for positioning the magnets 34 are inserted and as pores for discharging water.

Therefore, according to the aforementioned second embodiment, it is possible to reliably discharge the water droplets or the like even in a case in which the water droplets or the like enter the rotor yoke 220 in addition to the effects that are similar to those in the aforementioned first embodiment. Therefore, it is possible to reliably prevent operation failures of the rotary electric machine 201 due to the water droplets or the like and to improve reliability of the rotary electric machine 201.

In addition, the drain holes 204 and the slits 205 are respectively disposed such that the drain holes 204 and the slits 205 are aligned with the protruding-shaped portions 36a of the magnet cover 235 in the axial direction. That is, the drain holes 204 and the slits 205 are formed at positions at which the drain holes 204 and the slits 205 do not overlap the magnets 34 in the radial direction. Therefore, it is possible to curtail contact of the magnets 34 with water in contrast to a case in which the drain holes 204 and the slits 205 are formed at positions at which the drain holes 204 and the slits 205 overlap the magnets 34 in the radial direction.

For example, the case in which the rotary electric machine 1 or 201 is attached to the engine 100 of the motorcycle 200 or the like has been described in the aforementioned embodiments. However, the invention is not limited thereto, and it is possible to use the rotary electric machine 1 or 201 for various devices.

In addition, the case in which the protruding portion 31 is formed over the entire outer peripheral portion of the bottom portion 22 of the rotor yoke 20 has been described in the aforementioned first embodiment. In an exemple that does not form part of the invention, a plurality of protruding portions 31 may be formed intermittently at the outer peripheral portion of the bottom portion 22. With such a configuration, it is possible to adjust the inertial force of the rotor yoke 20. In addition, it is desirable that the protruding portions 31 be disposed at equal intervals in this case. In this manner, it is possible to keep rotation balance of the rotor yoke 20.

Further, the case in which the protruding portion 31 is formed by performing press-working on the bottom portion 22 has been described in the aforementioned first embodiment. However, the invention is not limited thereto, and the protruding portion 31 may be separately provided at the outer peripheral portion of the bottom portion 22.

In addition, the case in which the attachment seat 27 formed at the center of the bottom portion 22 in the radial direction is formed such that the attachment seat 27 slightly deviates from the bottom portion 22 toward the side of the crankcase 101 has been described in the aforementioned first embodiment. However, the invention is not limited thereto, and the bottom portion 22 and the attachment seat 27 may be formed on the same surface as needed.

In addition, the case in which the drain holes 204 and the slits 205 are formed at the inner flange portion 237 of the magnet cover 235 has been described in the aforementioned second embodiment. Further, the case in which the drain holes 204 and the slits 205 are disposed in the staggered manner in the circumferential direction in the magnet cover 235 has been described. However, the invention is not limited thereto, and at least either the pores and the slits that communicate at least the inner side of the rotor yoke 220 than the magnet cover 235 in the radial direction with the jig holes 33 of the rotor yoke 220 may be formed in the magnet cover 235.

In addition, the case in which the plurality of jig holes 33 are formed in the lateral wall 31b of the rotor yoke 20 has been described in the aforementioned embodiments. The case in which the jig holes 33 are used to position the magnets 34 by inserting the jigs Z thereinto has been described. However, the invention is not limited thereto, and simple communication holes into which the jigs Z cannot be inserted may be employed. It is possible to cause the communication holes to function as the pores for discharging water even in a case in which such a configuration is employed.

### [Industrial Applicability]

According to the aforementioned outer rotor-type rotary electric machine, it is possible to effectively increase the weight of the outer peripheral portion of the rotor yoke as compared with the central part of the rotor yoke in the radial direction by forming the protruding portion that protrudes toward the side opposite to the engine in the outer peripheral surface of the bottom portion of the rotor yoke. As a result, it is possible to efficiently increase the inertial force of the rotor yoke.

In addition, since it is not necessary to increase the weight of the entire rotor yoke, it is possible to curtail an increase in size of the rotor yoke. Therefore, it is not necessary to elongate the crankshaft, and it is possible to curtail shaking of the crankshaft during rotation.

In addition, since the cooling fan is provided in the surface of the bottom portion of the rotor yoke on the side opposite to the engine, the cooling fan is not disposed between the engine and the outer rotor-type rotary electric machine, and it is possible to dispose the cooling fan on the side of the outer rotor-type rotary electric machine opposite to the engine.

Accordingly, it is possible to reduce the size and to increase the performance of the outer rotor-type rotary electric machine.

### [Reference Signs List]

1, 201 Outer rotor-type rotary electric machine
2 Stator
3 Flywheel unit
4 Cooling fan
20, 220 Rotor yoke
21 Rotor boss
22, 222 Bottom portion
22a One surface (surface)
23, 223 Side portion
27 Attachment seat
28 Bottom portion-side coupling portion (attachment hole)
31 Protruding portion
33 Jig hole (communication hole)
34 Magnet
35 Magnet cover
36 Cover main body
37 Inner flange portion
38 Outer flange portion
51 Inclined portion (inner flange portion)
52 Abutting portion (inner flange portion)
100 Engine
102 Crankshaft
200 Motorcycle
202 Body
203 Side stand
204 Drain hole (pore)
205 Slit
235 Magnet cover
C Rotation axial line
Z Jig (positioning jig)

## Claims

1. An outer rotor-type rotary electric machine comprising:
a stator (2) that is secured to a crankcase (101) of an engine (100); and
a rotor yoke (20) that is attached to a crankshaft (102) of the engine and covers the stator (2) on a side opposite to the engine,
wherein the rotor yoke (20) includes:
a rotor boss (21) that is fitted onto and secured to the crankshaft (102), a disk-shaped bottom portion (22) that is provided at an end of the rotor boss (21) on a side opposite to the engine and is formed coaxially with a rotation axial line (C) of the crankshaft (102), and
a side portion (23) that extends and bends on a side of the engine from an outer peripheral edge of the bottom portion (22) toward a side of the crankcase (101), covers an outer peripheral surface of the stator (2), and has an inner peripheral surface with a plurality of magnets (34) provided at equal intervals, and
wherein a protruding portion (31) that protrudes on a side opposite to the engine (100) is formed over an entire outer peripheral portion of the bottom portion (22),
**characterized in that**
a cooling fan (4) is provided on a surface of the bottom portion (22) on a side opposite to the engine (100), wherein a recessed form (41) is formed inside the protruding portion (31) in the radial direction by the protruding portion (31), wherein the recessed portion (41) accommodates the cooling fan (4), and the cooling fan (4) is fastened to the bottom portion (22) so that the cooling fan (4) is positioned inside the protruding portion (31) in the radial direction on the bottom portion (22).

2. The outer rotor-type rotary electric machine according to claim 1, wherein a plurality of communication holes (33) are formed at the respective positions corresponding to midpoints between adjacent magnets of the plurality of magnets (34) at the protruding portion (31).

3. The outer rotor-type rotary electric machine according to claim 1,
wherein an attachment seat (27) that has an attachment hole (28) that couples the bottom portion (22) to the rotor boss (21) is provided at a center of the bottom portion (22) in a radial direction, and
the attachment seat (27) is disposed such that the attachment seat (27) deviates toward the side of the engine (100) from the bottom portion (22).

4. The outer rotor-type rotary electric machine according to claim 2, comprising:
a magnet cover (35) that is fixed to an inner surface of the bottom portion (22) at the rotor yoke (20) and covers the magnets (34) from a side of the inner peripheral surface to hold the magnets (34),
wherein pores that allow an inside of the rotor yoke (20) in the radial direction to communicate with the communication hole (33) of the rotor yoke (20) are formed in the magnet cover (35).

5. The outer rotor-type rotary electric machine according to claim 4,
wherein the magnet cover (35) includes
a cover main body (36) that covers an inner peripheral surface of the magnets (34),
an inner flange portion (37) that projects from an end of the cover main body (36) on a side of the bottom portion (22) of the rotor yoke (20) toward the inside in the radial direction, and an outer flange portion (38) that projects from an end of the cover main body (36) on a side of an opening portion (20a) of the rotor yoke (20) toward the outside in the radial direction, and
the inner flange portion (37) is secured to the inner surface of the bottom portion (22), and the pore is formed in the inner flange portion (37).

6. The outer rotor-type rotary electric machine according to claim 4 or 5, wherein the pore is formed at a position at which the pore does not overlap the magnets (34) in the radial direction.

7. The outer rotor-type rotary electric machine according to claim 2, comprising:
A magnet cover (235) that is secured to the inner surface of the bottom portion (22) at the rotor yoke (20) and covers the magnets (34) from a side of the inner peripheral surface to hold the magnets (34),
wherein a slit (205) that causes the inside of the rotor yoke (20) in the radial direction to communicate with the communication hole (33) of the rotor yoke (20) is formed in the magnet cover (235).

8. The outer rotor-type rotary electric machine according to claim 7, wherein the magnet cover (235) includes
a cover main body (36) that covers the inner peripheral surface of the magnets (34),
an inner flange portion (37) that projects from an end of the cover main body (36) on the side of the bottom portion (22) of the rotor yoke (20) toward the inside in the radial direction, and an outer flange portion (38) that projects from an end of the cover main body (36) on the side of the opening portion (20a) of the rotor yoke (20) toward the outside in the radial direction, and
wherein the inner flange portion (37) is secured to the inner surface of the bottom portion (22), and the slit (205) is formed in the inner flange portion (37).

9. The outer rotor-type rotary electric machine according to claim 7 or 8, wherein the slit (205) is formed at a position at which the slit (205) does not overlap the magnets (34) in the radial direction.

10. A motorcycle comprising:
the outer rotor-type rotary electric machine according to any one of claims 1 to 9;
a body (202) to which the outer rotor-type rotary electric machine is attached, and
a side stand (203) that is provided outside the body (202) in a body width direction,
wherein the outer rotor-type rotary electric machine and the side stand (203) are disposed in a surface on a same side of the body (202) in the body width direction.

## Patentansprüche

1. Elektrische Drehkraftmaschine mit Außenrotor, umfassend:
einen Stator (2), der an einem Kurbelgehäuse (101) eines Motors (100) befestigt ist; und
ein Rotorjoch (20), das an einer Kurbelwelle (102) des Motors befestigt ist, wobei es den Stator (2) auf einer dem Motor gegenüberliegenden Seite bedeckt,
wobei das Rotorjoch (20) Folgendes beinhaltet:
eine Rotornabe (21), die auf der Kurbelwelle (102) angebracht und an dieser befestigt ist, einen scheibenförmigen unteren Abschnitt (22), der an einem Ende der Rotornabe (21) auf einer dem Motor gegenüberliegenden Seite vorgesehen ist, wobei er koaxial mit einer axialen Drehlinie (C) der Kurbelwelle (102) ausgebildet ist, und
einen seitlichen Abschnitt (23), der sich auf einer Seite des Motors von einer äußeren Umfangskante des unteren Abschnitts (22) zu einer Seite des Kurbelgehäuses (101) erstreckt und biegt, wobei er eine äußere Umfangsfläche des Stators (2) bedeckt und eine innere Umfangsfläche mit einer Mehrzahl an Magneten (34) aufweist, welche in gleichen Abständen vorgesehen sind, und
wobei ein hervorstehender Abschnitt (31), der auf einer dem Motor (100) gegenüberliegenden Seite hervorsteht, über den gesamten äußeren Umfangsbereich des unteren Abschnitts (22) ausgebildet ist,
**dadurch gekennzeichnet, dass**
ein Kühlgebläse (4) auf einer Fläche des unteren Abschnitts (22) auf einer dem Motor (100) gegenüberliegenden Seite vorgesehen ist, wobei innerhalb des hervorstehenden Abschnitts (31) in radialer Richtung durch den hervorstehenden Abschnitt (31) eine zurückgesetzte Form (41) gebildet wird, wobei der zurückgesetzte Abschnitt (41) das Kühlgebläse (4) aufnimmt und das Kühlgebläse (4) am unteren Abschnitt (22) derart befestigt ist, dass das Kühlgebläse (4) am unteren Abschnitt (22) in radialer Richtung innerhalb des hervorstehenden Abschnitts (31) angeordnet ist.

2. Elektrische Drehkraftmaschine mit Außenrotor gemäß Anspruch 1, wobei eine Mehrzahl an Kommunikationslöchern (33) an den jeweiligen Positionen ausgebildet sind, welche Mittelpunkten zwischen benachbarten Magneten der Mehrzahl an Magneten (34) am hervorstehenden Abschnitt (31) entsprechen.

3. Elektrische Drehkraftmaschine mit Außenrotor gemäß Anspruch 1,
wobei ein Befestigungssitz (27), der eine Befestigungsbohrung (28) aufweist, welche den unteren Abschnitt (22) an die Rotornabe (21) kuppelt, in radialer Richtung in der Mitte des unteren Abschnitts (22) vorgesehen ist, und
der Befestigungssitz (27) derart angeordnet ist, dass der Befestigungssitz (27) zur Seite des Motors (100) hin vom unteren Abschnitt (22) abweicht.

4. Elektrische Drehkraftmaschine mit Außenrotor gemäß Anspruch 2, umfassend:
eine Magnetabdeckung (35), die an einer Innenfläche des unteren Abschnitts (22) am Rotorjoch (20) befestigt ist und die Magnete (34) ausgehend von einer Seite der inneren Umfangsfläche bedeckt, um die Magnete (34) zu halten,
wobei in der Magnetabdeckung (35) Poren ausgebildet sind, die es einer Innenseite des Rotorjochs (20) in radialer Richtung ermöglichen, mit der Kommunikationsöffnung (33) des Rotorjochs (20) zu kommunizieren.

5. Elektrische Drehkraftmaschine mit Außenrotor gemäß Anspruch 4,
wobei die Magnetabdeckung (35) Folgendes beinhaltet
einen Abdeckungshauptkörper (36), der eine innere Umfangsfläche der Magnete (34) bedeckt;
einen inneren Flanschabschnitt (37), der ausgehend von einem Ende des Abdeckungshauptkörpers (36) auf einer Seite des unteren Abschnitts (22) des Rotorjochs (20) in radialer Richtung nach innen hervorsteht, und
einen äußeren Flanschabschnitt (38), der ausgehend von einem Ende des Abdeckungshauptkörpers (36) auf einer Seite eines Öffnungsabschnitts (20a) des Rotorjochs (20) in radialer Richtung nach außen hervorsteht, und
wobei der innere Flanschabschnitt (37) an der Innenfläche des unteren Abschnitts (22) befestigt ist, und die Pore im inneren Flanschabschnitt (37) ausgebildet ist.

6. Elektrische Drehkraftmaschine mit Außenrotor gemäß Anspruch 4 oder 5, wobei die Pore an einer Position ausgebildet ist, an welcher die Pore die Magnete (34) in radialer Richtung nicht überlappt.

7. Elektrische Drehkraftmaschine mit Außenrotor gemäß Anspruch 2, umfassend:
eine Magnetabdeckung (235), die an der Innenfläche des unteren Abschnitts (22) am Rotorjoch (20) befestigt ist und die Magnete (34) ausgehend von einer Seite der inneren Umfangsfläche bedeckt, um die Magnete (34) zu halten,
wobei ein Schlitz (205), der bewirkt, dass das Innere des Rotorjochs (20) in radialer Richtung mit der Kommunikationsöffnung (33) des Rotorjochs (20) kommuniziert, in der Magnetabdeckung (235) ausgebildet ist.

8. Elektrische Drehkraftmaschine mit Außenrotor gemäß Anspruch 7, wobei die Magnetabdeckung (235) Folgendes beinhaltet
einen Abdeckungshauptkörper (36), der die innere Umfangsfläche der Magnete (34) bedeckt;
einen inneren Flanschabschnitt (37), der ausgehend von einem Ende des Abdeckungshauptkörpers (36) auf der Seite des unteren Abschnitts (22) des Rotorjochs (20) in radialer Richtung nach innen hervorsteht, und einen äußeren Flanschabschnitt (38), der ausgehend von einem Ende des Abdeckungshauptkörpers (36) auf der Seite des Öffnungsabschnitts (20a) des Rotorjochs (20) in radialer Richtung nach außen hervorsteht, und
wobei der innere Flanschabschnitt (37) an der Innenfläche des unteren Abschnitts (22) befestigt ist und der Schlitz (205) im inneren Flanschabschnitt (37) ausgebildet ist.

9. Elektrische Drehkraftmaschine mit Außenrotor gemäß Anspruch 7 oder 8, wobei der Schlitz (205) an einer Position ausgebildet ist, an welcher der Schlitz (205) die Magnete (34) in radialer Richtung nicht überlappt.

10. Motorrad, umfassend:
die elektrische Drehkraftmaschine mit Außenrotor gemäß einem beliebigen der Ansprüche 1 bis 9;
einen Körper (202), an dem die elektrische Drehkraftmaschine mit Außenrotor befestigt ist, und
einen Seitenständer (203), der außerhalb des Körpers (202) in einer Körperbreitenrichtung vorgesehen ist,
wobei die elektrische Drehkraftmaschine mit Außenrotor und der Seitenständer (203) in einer Fläche auf derselben Seite des Körpers (202) in der Körperbreitenrichtung angeordnet sind.

## Revendications

1. Machine électrique rotative de type à rotor extérieur comprenant :
un stator (2) qui est fixé à un carter (101) d'un moteur (100) ; et
une culasse de rotor (20) qui est fixée à un vilebrequin (102) du moteur et recouvre le stator (2) sur un côté opposé au moteur,
dans laquelle la culasse de rotor (20) inclut :
un bossage de rotor (21) qui est ajusté sur et fixé au vilebrequin (102), une partie inférieure en forme de disque (22) qui est prévue à une extrémité du bossage de rotor (21) sur un côté opposé au moteur et est formée coaxialement à un axe de rotation (C) du vilebrequin (102), et
une partie latérale (23) qui s'étend et fléchit sur un côté du moteur à partir d'un bord périphérique extérieur de la partie inférieure (22) vers un côté du carter (101), recouvre une surface périphérique extérieure du stator (2), et présente une surface périphérique intérieure avec une pluralité d'aimants (34) prévus à des intervalles égaux, et
dans laquelle une partie saillante (31) qui fait saillie sur un côté opposé au moteur (100) est formée sur toute une partie périphérique extérieure de la partie inférieure (22),
**caractérisée en ce que**
un ventilateur de refroidissement (4) est prévu sur une surface de la partie inférieure (22) sur un côté opposé au moteur (100), dans laquelle une forme en retrait (41) est formée à l'intérieur de la partie saillante (31) dans la direction radiale par la partie saillante (31), dans laquelle la partie en retrait (41) reçoit le ventilateur de refroidissement (4), et le ventilateur de refroidissement (4) est fixé à la partie inférieure (22) de telle sorte que le ventilateur de refroidissement (4) soit positionné à l'intérieur de la partie saillante (31) dans la direction radiale sur la partie inférieure (22).

2. Machine électrique rotative de type à rotor extérieur selon la revendication 1, dans laquelle une pluralité de trous de communication (33) sont formés aux positions respectives correspondant à des points médians entre des aimants adjacents de la pluralité d'aimants (34) au niveau de la partie saillante (31).

3. Machine électrique rotative de type à rotor extérieur selon la revendication 1,
dans laquelle un siège de fixation (27) qui présente un trou de fixation (28) qui couple la partie inférieure (22) au bossage de rotor (21) est prévu au centre de la partie inférieure (22) dans une direction radiale, et
le siège de fixation (27) est disposé de telle sorte que le siège de fixation (27) dévie vers le côté du moteur (100) à partir de la partie inférieure (22).

4. Machine électrique rotative de type à rotor extérieur selon la revendication 2, comprenant :
un couvercle d'aimants (35) qui est fixé à une surface intérieure de la partie inférieure (22) au niveau de la culasse de rotor (20) et recouvre les aimants (34) à partir d'un côté de la surface périphérique intérieure pour maintenir les aimants (34),
dans laquelle des pores qui permettent à un intérieur de la culasse de rotor (20) dans la direction radiale de communiquer avec le trou de communication (33) de la culasse de rotor (20) sont formés dans le couvercle d'aimants (35).

5. Machine électrique rotative de type à rotor extérieur selon la revendication 4,
dans laquelle le couvercle d'aimants (35) inclut
un corps principal de couvercle (36) qui recouvre une surface périphérique intérieure des aimants (34),
une partie de bride intérieure (37) qui fait saillie à partir d'une extrémité du corps principal de couvercle (36) sur un côté de la partie inférieure (22) de la culasse de rotor (20) vers l'intérieur dans la direction radiale, et
une partie de bride extérieure (38) qui fait saillie à partir d'une extrémité du corps principal de couvercle (36) sur un côté d'une partie d'ouverture (20a) de la culasse de rotor (20) vers l'extérieur dans la direction radiale, et
la partie de bride intérieure (37) est fixée à la surface intérieure de la partie inférieure (22), et le pore est formé dans la partie de bride intérieure (37).

6. Machine électrique rotative de type à rotor extérieur selon la revendication 4 ou 5, dans laquelle le pore est formé dans une position dans laquelle le pore ne chevauche pas les aimants (34) dans la direction radiale.

7. Machine électrique rotative de type à rotor extérieur selon la revendication 2, comprenant :
un couvercle d'aimants (235) qui est fixé à une surface intérieure de la partie inférieure (22) au niveau de la culasse de rotor (20) et recouvre les aimants (34) à partir d'un côté de la surface périphérique intérieure pour maintenir les aimants (34),
dans laquelle une fente (205) qui amène l'intérieur de la culasse de rotor (20) dans la direction radiale à communiquer avec le trou de communication (33) de la culasse de rotor (20) est formée dans le couvercle d'aimants (235).

8. Machine électrique rotative de type à rotor extérieur selon la revendication 7, dans laquelle le couvercle d'aimants (235) inclut
un corps principal de couvercle (36) qui recouvre la surface périphérique intérieure des aimants (34),
une partie de bride intérieure (37) qui fait saillie à partir d'une extrémité du corps principal de couvercle (36) sur le côté de la partie inférieure (22) de la culasse de rotor (20) vers l'intérieur dans la direction radiale, et une partie de bride extérieure (38) qui fait saillie à partir d'une extrémité du corps principal de couvercle (36) sur le côté de la partie d'ouverture (20a) de la culasse de rotor (20) vers l'extérieur dans la direction radiale, et
dans laquelle la partie de bride intérieure (37) est fixée à la surface intérieure de la partie inférieure (22), et la fente (205) est formée dans la partie de bride intérieure (37).

9. Machine électrique rotative de type à rotor extérieur selon la revendication 7 ou 8, dans laquelle la fente (205) est formée dans une position dans laquelle la fente (205) ne chevauche pas les aimants (34) dans la direction radiale.

10. Motocyclette, comprenant :
la machine électrique rotative de type à rotor extérieur selon l'une quelconque des revendications 1 à 9 ;
un corps (202) auquel la machine électrique rotative de type à rotor extérieur est fixée, et
un support latéral (203) qui est prévu à l'extérieur du corps (202) dans la direction de la largeur du corps,
dans lequel la machine électrique rotative de type à rotor extérieur et le support latéral (203) sont disposés dans une surface sur un même côté du corps (202) dans la direction de la largeur du corps.
